# EUROPÄISCHE PATENTSCHRIFT

(11) **EP 3 513 047 B1**
(45) Veröffentlichungstag und Bekanntmachung des Hinweises auf die Patenterteilung: **13.04.2022**
(21) Anmeldenummer: 17768770.4
(22) Anmeldetag: 15.09.2017
(51) Int. Cl.: F01N 3/20, C01B 3/00, C01B 3/26

(54) **VORRICHTUNG UND VERFAHREN ZUR REDUZIERUNG VON STICKOXIDEN IM ABGAS**
DEVICE AND METHOD FOR REDUCING NITROGEN OXIDES IN EXHAUST
DISPOSITIF ET PROCÉDÉ PERMETTANT DE RÉDUIRE LES OXYDES D'AZOTE DANS LES GAZ D'ÉCHAPPEMENT

(30) Priorität: 16.09.2016 DE 102016011208
(43) Veröffentlichungstag der Anmeldung: 24.07.2019
(73) Patentinhaber: HYDROGENIOUS LOHC TECHNOLOGIES GMBH, 91058 Erlangen (DE)
(72) Erfinder: ARLT, Wolfgang, 90425 Nürnberg (DE); WENSING, Michael, 91080 Uttenreuth (DE); KARL, Jürgen, 91126 Schwabach (DE)
(74) Vertreter: Rau, Schneck & Hübner Patentanwälte Rechtsanwälte PartGmbB
(86) Internationale Anmeldenummer: PCT/EP2017/073298
(87) Internationale Veröffentlichungsnummer: WO 2018/050831

(56) Entgegenhaltungen:
- EP-A1- 1 691 065
- EP-A2- 1 832 738
- GB-A- 2 469 977
- JP-A- 2006 257 906
- JP-A- 2007 138 799

## Beschreibung

Die Erfindung betrifft eine Vorrichtung und ein Verfahren zur Reduzierung von Stickoxiden im Abgas aus einer Antriebseinheit für ein Fahrzeug sowie ein derartiges Fahrzeug.

Aus der DE 198 36 249 C1 sind ein Verfahren und eine Vorrichtung zum Stickoxidabbau in einem Verbrennungsgas bekannt. Mittels Selective Catalytic Reduction (SCR) wird zunächst eine wässrige Harnstofflösung in Ammoniak und Kohlendioxid durch Thermolyse und Hydrolyse hergestellt. Ammoniak dient als Reduktionsmittel für Stockoxide NOₓ.

NO + NH3 + ¼ O₂ →N₂ + 1,5 H₂O (1)

Für die Reduktion von 1 g NOₓ im Abgas werden mindestens 3,13 g wässrige Harnstofflösung, die auch als Ad-Blue-Zusatz bekannt ist, benötigt. Die wässrige Harnstofflösung wird ab -11°C fest. Der zusätzliche Tank für die wässrige Harnstofflösung und Verbindungsleitungen zum Verbrennungsmotor sowie die Tanksäule des Ad-Blue-Zusatzes müssen ausreichend geheizt sein, um ein Blockieren der Leitung zu verhindern. Nachteilig ist auch, dass für die Umsetzung der Harnstoff-SCR Prozesstemperaturen von 300°C erforderlich sind. Damit ist diese Technik nach dem Motorstart nicht sofort verfügbar. Zudem darf der Motor nicht an seinem Effizienzmaximum betrieben werden, damit die erforderlichen Abgastemperaturen überhaupt erreicht werden können. Der Treibstoffbedarf, insbesondere der Treibstoffverbrauch je 100 km, ist erhöht.

Die GB 2 469 977 A offenbart die Wasserstoffzuführung für einen Verbrennungsmotor zur Stickoxidreduzierung.

Der Erfindung liegt die Aufgabe zugrunde, die Reduzierung von Stickoxiden im Abgas aus einer Antriebseinheit zu verbessern.

Diese Aufgabe wird durch eine Vorrichtung mit den im Anspruch 1 angegebenen Merkmalen und durch ein Verfahren mit den im Anspruch 11 angegebenen Merkmalen gelöst. Der Kern der Erfindung besteht darin, dass Wasserstoffgas als Reduktionsmittel für Stickoxide genutzt wird. Das Wasserstoffgas liegt im erfindungsgemäßen Verfahren in chemisch gebundener Form an einem Wasserstoffträgermaterial in der Vorrichtung in einem ersten Speicherbehälter vor. Das Wasserstoffträgermaterial ist zumindest teilweise mit Wasserstoff beladen. In einem Dehydrierreaktor wird der Wasserstoff von dem Wasserstoffträgermaterial freigesetzt und zum Reduzieren der Stickoxide in einen Reduktionsreaktor überführt. Dem Reduktionsreaktor wird auch das Abgas aus einer Antriebseinheit mit heute gebräuchlichen chemischen Energieträgern, insbesondere Diesel oder Super Benzin, und/oder aus einer Antriebseinheit mit dem Energieträger Wasserstoff zugeführt. In dem Reduktionsreaktor findet die Reduktionsreaktion der Stickoxide beispielsweise nach Gleichung (1) statt. Überraschend wurde gefunden, dass von dem Wasserstoffträgermaterial freigesetzter Wasserstoff als Reduktionsmittel für die Stickoxide vorteilhaft zur Verfügung gestellt werden kann. Der Bedarf an Wasserstoffträgermaterial, insbesondere flüssiges organisches Wasserstoffträgermaterial (LOHC), ist abhängig von dem Niveau der Stickoxidbelastung. Der LOHC-Verbrauch beträgt insbesondere weniger als 1,0 1/100 km, insbesondere weniger als 0,8 1/100 km und insbesondere weniger als 0,5 1/100 km.

Besonders vorteilhaft ist, dass die Reduktionsreaktion der Stickoxide, die auch als Denox-Reaktion bezeichnet wird, unter Verwendung von Wasserstoff bei Reaktionstemperaturen durchgeführt werden kann, die niedriger, insbesondere deutlich niedriger, sind als die Reaktionstemperaturen bei der Reduktion von Stickoxiden mit einer wässrigen Harnstofflösung. Der Reduktionsreaktor kann flexibel entlang des Abgasstrangs eines Kraftfahrzeugs angeordnet sein. Insbesondere ist beinahe jede Stelle entlang des Abgasstrangs für die Anordnung des Reduktionsreaktors möglich. Dadurch ergeben sich verbesserte Gestaltungsmöglichkeiten bei der Auslegung eines Kraftfahrzeugs, insbesondere von dessen Antriebsstrang. Da die erforderliche Abgastemperatur reduziert ist, kann die Antriebseinheit, also der Antriebsmotor, in seinem optimalen Betriebspunkt betrieben werden. Der Treibstoffverbrauch ist reduziert. Erfindungsgemäß wurde gefunden, dass es möglich ist, eine erhöhte Stickoxid-Bildung zu akzeptieren, da die Stickoxide zuverlässig reduziert werden können. Durch die erhöhte Stickoxid-Bildung sinkt bei kohlenstoffhaltigen Treibstoffen wie Diesel oder Super Benzin die Rußbildung. Die Partikelemissionen, insbesondere Rußpartikel, im Abgas der Antriebseinheit mit kohlenstoffhaltigem Treibstoff sind insgesamt verbessert.

Die Ausführung der Antriebseinheit als Verbrennungseinheit gemäß Anspruch 2 ermöglicht die Nutzung der Vorrichtung für eine Vielzahl von Verbrennungsmotoren. In der Verbrennungseinheit wird ein Gemisch aus Verbrennungsluft und einem Treibstoff wie beispielsweise Benzin-Kraftstoff, Diesel-Kraftstoff oder Wasserstoff, verbrannt.

Gemäß einer nicht erfindungsgemäßen Ausführungsform kann eine Antriebseinheit als Hochtemperatur-Brennstoffzelle (SOFC) ausgeführt sein. In einer Hochtemperatur-Brennstoffzelle werden zumindest anteilig Stickoxide erzeugt.

Eine Anordnung des Reduktionsreaktors gemäß Anspruch 3 ermöglicht eine vorteilhafte Reduktion der Stickoxide. Bei einer nachgeschalteten Anordnung des Reduktionsreaktors gegenüber der Antriebseinheit, können die Abgase aus der Antriebseinheit und der freigesetzte Wasserstoff aus dem Dehydrierreaktor unmittelbar dem Reduktionsreaktor zugeführt werden. Wenn der Reduktionsreaktor in der Antriebseinheit integriert ist, ist der apparative Aufwand und insbesondere der Bauraum, der in dem Fahrzeug zur Verfügung gestellt werden müsste, reduziert. Eine derartige Anordnung ist besonders platzsparend ausführbar.

Ein zweiter Speicherbehälter gemäß Anspruch 4 ermöglicht das Speichern des zumindest teilweise entladenen Wasserstoffträgermediums. Der zweite Speicherbehälter ist insbesondere mit dem Dehydrierreaktor in Fluidverbindung. Der zweite Speicherbehälter kann mit einer Entnahmeöffnung versehen sein, um das entladene Wasserstoffträgermedium zu entnehmen und beladenes Trägermedium einzufüllen.

Zusätzlich oder alternativ kann das zumindest teilweise entladene Wasserstoffträgermedium als Treibstoff in der Antriebseinheit, insbesondere einem Verbrennungsmotor, genutzt werden. Das zumindest teilweise entladene Wasserstoffträgermedium steht kostengünstig als Treibstoff zur Verfügung.

Eine Regelungseinheit gemäß Anspruch 5 ermöglicht eine vorteilhafte Durchführung der Reduktionsreaktion in dem Reduktionsreaktor. Insbesondere kann ein Zugeben einer dosierten Menge des Wasserstoffs in dem Reduktionsreaktor derart erfolgen, dass die stöchiometrischen Voraussetzungen für die Reduktion der Stickoxide mit Wasserstoff zu Wasser und Stickstoff erfüllt sind. Die Reduktionsreaktion ist besonders effizient durchführbar.

Eine Signalverbindung gemäß Anspruch 6 ermöglicht eine unmittelbare Kommunikation zwischen der Regelungseinheit und der Antriebseinheit.

Eine Wärmeübertragungsvorrichtung gemäß Anspruch 7 ermöglicht eine Reduzierung des Gesamtenergieaufwands. Das Betreiben der Vorrichtung ist energieeffizient möglich. Die Freisetzung von Wasserstoff in dem Dehydrierreaktor ist endotherm. Die hierfür erforderliche Wärme kann zumindest anteilig als Abwärme aus der Antriebseinheit zugeführt werden.

Die Verwendung von Katalysatormaterial nach Anspruch 8 ermöglicht eine effiziente Reduktionsreaktionsführung, insbesondere bei niedrigen Temperaturen und hohen Umsätzen der Stickoxide bis zu einem Stickoxid-Restanteil, der messtechnisch nicht mehr nachweisbar ist.

Die Verwendung eines flüssigen organischen Trägermaterials (LOHC) als Wasserstoffträgermaterial gemäß Anspruch 9 hat sich als besonders vorteilhaft erwiesen. Insbesondere ist der Schmelzpunkt von Dibenzyltoluol bei -39 °C und Perhydrodibenzyltoluol bei -45 °C als ein Beispiel für LOHC deutlich niedriger als der Schmelzpunkt der wässrigen Harnstofflösung bei -11 °C gemäß dem Stand der Technik. Der Schmelzpunkt des Wasserstoffträgermaterials unterschreitet insbesondere den Stockpunkt von Winter-Diesel. Der Einsatz in einem Kraftfahrzeug ist problemlos möglich. LOHC ist besonders unkompliziert und vorteilhaft handhabbar. LOHC ist eine Flüssigkeit und kann wie heute bekannter Treibstoff flüssig getankt werden. In einer Variante des Verfahrens wird das wenigstens teilweise entladene LOHC zur Tankstelle zurückgeliefert und in Folge mit Wasserstoff an der Tankstelle erneut beladen. In einer anderen Variante kann das LOHC als Treibstoff dienen. Der im LOHC gespeicherte Wasserstoff ist gegenüber einem tiefkalten Wasserstoff oder Druckwasserstoff von Vorteil, insbesondere hinsichtlich seiner Handhabung und seiner Speicherung.

Ein Fahrzeug gemäß Anspruch 10 weist die Vorteile der Vorrichtung auf, worauf hiermit verwiesen wird. Ein zeitlich geregeltes Zugeben des Wasserstoffs in den Reduktionsreaktor, wobei die Zugabe erfolgt, nachdem ein Höhepunkt der Treibstoffverbrennung in der Verbrennungseinheit als Antriebseinheit überschritten ist, steigert die Effizienz der Stickoxid-Reduzierung.

Die geregelte Zugabe einer Dosierungsmenge des Wasserstoffs gemäß Anspruch 11 gewährleistet die effiziente Durchführung der Stockoxid-Reduzierung.

Prozesstemperaturen im Reduktionsreaktor gemäß Anspruch 13 gewährleisten eine effiziente Stickoxid-Reduzierung, insbesondere auch bereits unmittelbar nach Start der Antriebseinheit. Eine externe Wärmezufuhr, beispielsweise mittels zusätzlicher Wärmequellen, ist entbehrlich.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine schematische Ansicht eines Fahrzeugs mit einer erfindungsgemäßen Vorrichtung zur Reduzierung von Stickoxiden,
- Fig. 2: eine schematische Ansicht der Vorrichtung gemäß Fig. 1 gemäß einem ersten Ausführungsbeispiel, und
- Fig. 3: eine Fig. 2 entsprechende Darstellung einer Vorrichtung gemäß einem zweiten Ausführungsbeispiel.

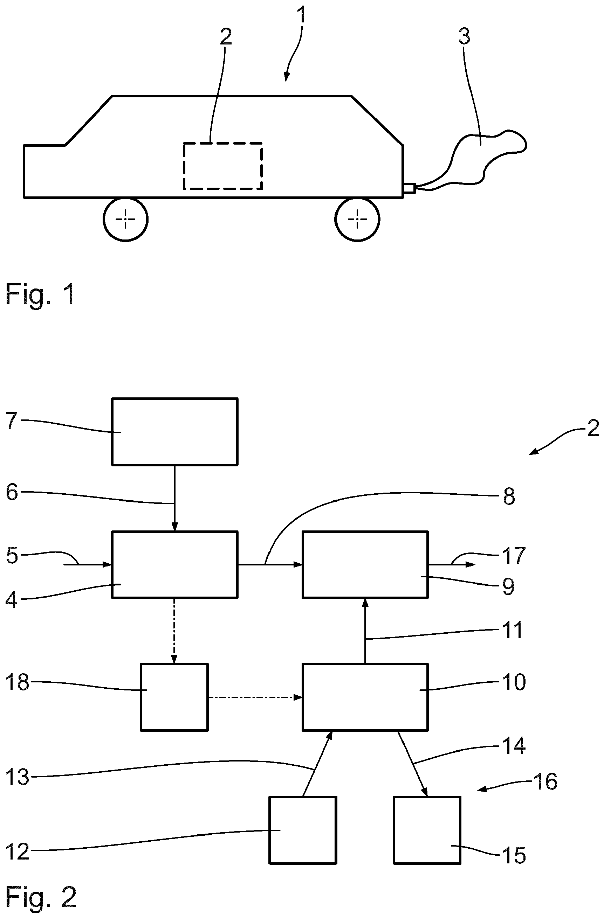

Eine in Fig. 1 gezeigtes Fahrzeug 1 ist ein Kraftfahrzeug in Form eines Automobils. Das angetriebene Fahrzeug 1 kann auch ein Lastkraftwagen, ein Traktor oder ein Zweirad sein. Das Fahrzeug 1 weist eine Antriebseinheit auf.

Die rein schematisch in Fig. 1 gezeigte Vorrichtung 2 ermöglicht die Reduzierung von Stickoxiden NOₓ, insbesondere Stickstoffmonoxid NO und/oder Stickstoffdioxid NO₂, im Abgas 3 des Kraftfahrzeugs 1.

Die Vorrichtung 2 wird nachfolgend anhand von Fig. 2 näher erläutert. Die Vorrichtung 2 umfasst eine Antriebseinheit 4 in Form einer Verbrennungseinheit als Verbrennungsmotor zum Verbrennen eines Gemischs aus Verbrennungsluft 5 und Treibstoff 6 aus einem Treibstoff-Speicherbehälter 7. Durch die Verbrennung des Treibstoff-Verbrennungsluft-Gemischs in der Antriebseinheit 4 wird Antriebsenergie bereitgestellt, die durch Kraftübertragung in gewohnter Weise auf einen Antriebsstrang des Fahrzeugs 1 übertragen wird.

Abgas aus der Antriebseinheit 4 wird über eine erste Abgasleitung 8 einem Reduktionsreaktor 9 zugeführt. Ebenfalls mit dem Reduktionsreaktor 9 verbunden ist ein Dehydrierreaktor 10, um freigesetztes Wasserstoffgas aus dem Dehydrierreaktor 10 in den Reduktionsreaktor 9 zu führen. Der Dehydrierreaktor 10 ist mit dem Reduktionsreaktor 9 über eine WasserstoffLeitung 11 verbunden.

Zum Freisetzen von Wasserstoffgas in dem Dehydrierreaktor 10 wird dies von einem ersten Speicherbehälter 12 über eine Verbindungsleitung 13 mit zumindest teilweise beladendem Wasserstoffträgermaterial versorgt. In dem Dehydrierreaktor 10 findet eine Dehydrierreaktion des zumindest teilweise beladenen Wasserstoffträgermediums statt. Eine derartige Reaktion ist aus EP 2 748 885 A1 bekannt, worauf hiermit verwiesen wird. Das zumindest teilweise entladene Wasserstoffträgermaterial wird aus dem Dehydrierreaktor 10 über eine weitere Versorgungsleitung 14 in einen zweiten Speicherbehälter 15 transportiert. Gemäß einer nicht dargestellten Ausführungsform kann der zweite Speicherbehälter 15 auch entfallen.

Der Dehydrierreaktor 10 und die über die Versorgungsleitungen 13 und 14 damit verbundenen Speicherbehälter 12 und 15 bilden eine Wasserstoff-Bereitstellungs-Infrastruktur 16, die im Fahrzeug 1 vorhanden ist, um Wasserstoff gefahrlos zu speichern und als Reduktionsmittel zur Verfügung zu stellen. Die Wasserstoff-Bereitstellungs-Infrastruktur 16 ist eine separate Einheit, die in der Vorrichtung 2 vorgesehen ist.

Mittels des von dem Dehydrierreaktor 10 in den Reduktionsreaktor 9 transportierten Wasserstoff wird das Abgas aus der Antriebseinheit 4 gemäß Gleichung (1) reduziert.

Aus dem Reduktionsreaktor 9 wird gereinigtes Abgas 3 über eine zweite Abgasleitung 17 abgeführt. Besonders vorteilhaft ist es, dass als Wasserstoffträgermaterial Perhydrodibenzyltoluol (H18-DBT) verwendet wird, das zu Dibenzyltoluol (HO-DBT) dehydriert wird. Als Verbrennungsmotor wird ein Diesel-Kraftstoffmotor verwendet.

Die Vorrichtung 2 weist ferner eine Regelungseinheit 18 auf. Die Regelungseinheit 18 steht mit der Antriebseinheit 4 und mit dem Dehydrierreaktor 10 in Signalverbindung. Insbesondere sind in der Antriebseinheit 4 Sensoren vorgesehen, die ein Signal erzeugen und an die Regelungseinheit 18 übermitteln, wenn ein Höhepunkt der Treibstoffverbrennung in der Antriebseinheit 4 überschritten ist.

Als Höhepunkt der Verbrennung wird ein Zeitpunkt während der Verbrennung im Motorprozess bezeichnet. Zu diesem Zeitpunkt sind 50 % des im Treibstoff gespeicherten Heizwertes als Wärme freigesetzt. Dieser Zeitpunkt in Abhängigkeit der Kolbenbewegung hat entscheidenden Einfluss auf die Effizienz der Treibstoffverbrennung. Die zeitliche Lage des Verbrennungsschwerpunktes, also die Schwerpunktlage der Verbrennung, kann durch eine schnelle Druckverlaufsmessung und eine Analyse dieses Druckverlaufs mittels einer Energiebilanz erfasst werden.

Vorteilhaft ist ein NOx-Sensor, der unmittelbar den NOx-Anteil misst. Der NOx-Sensor kann unmittelbar vor und/oder hinter der Antriebseinheit 4 angeordnet sein. Alternativ oder zusätzlich zu dem NOx-Sensor können die an der Antriebseinheit bereits vorhandenen Sensoren, insbesondere Temperatur- und/oder Druck-Sensoren zur Messung von Betriebsdaten dienen. Aus den Betriebsdaten können die NOx-Emissionen anhand eines analytischen und/oder numerischen Modells berechnet werden.

In Abhängigkeit dieses Signals erzeugt die Regelungseinheit 18 ein Signal, das an den Dehydrierreaktor 10 übermittelt wird. In Abhängigkeit dieses Signals wird der in dem Dehydrierreaktor 10 freigesetzte Wasserstoff in den Reduktionsreaktor 9 übermittelt. Dazu kann der Dehydrierreaktor 10, insbesondere die Wasserstoffleitung 11, mit entsprechenden Ventilen ausgerüstet sein. Zusätzlich dient die Regelungseinheit 18 auch zu der Übermittlung einer bestimmten Dosierungsmenge des freigesetzten Wasserstoffs in den Reduktionsreaktor 9, um zu gewährleisten, dass die stöchiometrischen Voraussetzungen für die Reduktionsreaktion in dem Reduktionsreaktor 9 eingehalten sind. Die Reduktion verläuft dann besonders effizient.

Wasserstoffgas kann auch zur Nachbehandlung der Stickoxide genutzt werden. Der Ansaugluft für den Verbrennungsmotor kann partiell Wasserstoffgas zugegeben werden. Ein Verbrennungsmotor ist insbesondere ein Dieselmotor oder ein Ottokraftstoffmotor. Neben einer Reduktion der NOx-Emissionen ist beispielsweise auch eine Reduktion von HC-Emissionen und Kohlendioxid-Emissionen möglich.

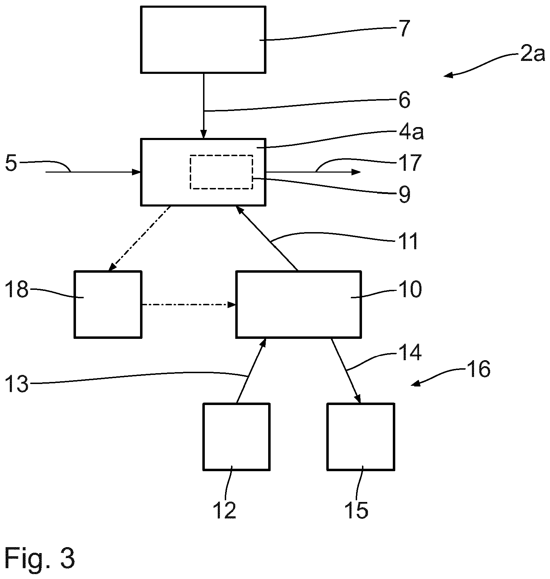

Unter Bezugnahme auf Fig. 3 wird ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Bei der Vorrichtung 2a ist der Reduktionsreaktor 9 in der Antriebseinheit 4a integriert ausgeführt. Dadurch ist der erforderliche Bauraum in dem Fahrzeug 1 reduziert.

Bei dem gezeigten Ausführungsbeispiel ist der Dehydrierreaktor 10 über die Wasserstoffleitung 11 unmittelbar mit der Antriebseinheit 4a verbunden. Die Zugabe des Wasserstoffgases aus dem Dehydrierreaktor 10 in die Antriebseinheit 4a, insbesondere in den in der Antriebseinheit 4a integrierten Reduktionsreaktor 9, erfolgt zeitlich und mengenmäßig geregelt mittels der Regelungseinheit 18.

Insbesondere ist die Antriebseinheit 4a als Brennstoffzelle ausgeführt. Als Treibstoff dient insbesondere Wasserstoffgas. Wasserstoffgas hat also eine Doppelfunktion, dient sowohl als Treibstoff als auch als Reduktionsmittel für die Stickoxide. Die Bereitstellung der erforderlichen Betriebsstoffe ist vereinfacht.

Die Vorteile des erfindungsgemäßen Verfahrens sind
- LOHC, im Falle des Dibenzyltoluols ist der Schmelzpunkt der unhydrierten=unbeladenen Form -39°C und der hydrierten=beladenen Form -45°C, haben einen deutlich niedrigeren Schmelzpunkt als Harnstoff-Wasser Mischungen, benötigen folglich keine Begleitheizung, weder in der Infrastruktur noch im Fahrzeug. Beide Stoffe unterschreiten den Stockpunkt von Winter-Diesel.
- Die niedrigere Reaktionstemperatur von H2-SCR im Vergleich zu Harnstoff- SCR führt zu einer schnelleren - und in einem weiteren Betriebsbereich - Reinigung der Abgase beim Kaltstart. Hieraus ergeben sich wesentliche Emissionsvorteile, da in vorgeschriebenen Emissionstests der größte Anteil der Emissionen während der Aufheizphase des Abgasnachbehandlungssystems emittiert wird.
- Die niedrigere Reaktionstemperatur erhöht die Freiheit der Platzierung des Reaktors 3 im Abgasstrom des Fahrzeugs.
- Bestenfalls wird keine additive Infrastruktur gebraucht.
- Verringerte Rußbildung,
- Verbesserte Motoreneffizienz,
- Im Vergleich zu einem integrierten Reforming-Prozess, wie er in DE 10 2007 039 081 beschrieben ist, ist der erfindungsgemäße Prozess technisch einfacher und erzeugt kein Kohlendioxid, so dass ein CO2-freier Betrieb möglich ist.
- Da die Reduktionsreaktion mit Wasserstoff bei jeder motorrelevanten Abgastemperatur durchgeführt werden kann, ergeben sich keine Betriebseinschränkungen des Motors, die Steuerung des Motors muss nicht ein bestimmtes Temperaturfenster der Abgasnachbehandlung einhalten, sondern kann den Motor stärker wirkungsgradoptimal betreiben.

Die Arbeitsweise eines Verfahrens sei an folgenden Beispielen beschrieben.

### Beispiel 1: Stickoxid-Entfernung mit Ad-Blue gemäß dem Stand der Technik

Dem NH3-SCR Katalysator liegt folgende Chemie zugrunde:
Harnstoff (Ad-Blue ist eine Lösung von ca. 32 Ma% Harnstoff in Wasser) wird einer Thermolyse und Hydrolyse unterworfen

(NH2)2CO + H2O → 2NH3 + CO2 (2)

Das eigentliche Reduktionsmittel ist Ammoniak. Hier wird zur Vereinfachung NOx als NO bilanziert.

NO + NH3 + ¼ O2 → N2 + 1,5 H2O (3)

Unterstellt man stöchiometrischen Umsatz, was technisch gut erfüllt wird, werden 3,13 g Adblue-Lösung für 1 g NO im Abgas benötigt.

### Gegenbeispiel 2: Stickoxid-Entfernung mit Wasserstoff aus LOHC

Der in Beispiel 1 genannte Fall wird jetzt durch das erfindungsgemäße Verfahren gelöst. Als Beispiel für einen Liquid Organic Hydrogen Carrier wird das flüssige Stoffpaar Dibenzyltoluol (H0-DBT)-Perhydrodibenzyltoluol (H18-DBT) gewählt. Durch chemische Reaktion wird Wasserstoff gebildet, 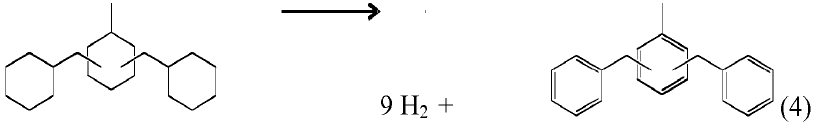 der dann mit dem NO chemisch reagiert:

NO + 2H₂ + ½ O₂ → ½ N₂ + 2H₂O (5)

Wird erneut stöchiometrischer Umsatz angenommen, benötigt man 2,15 g H18-DBT und folglich nur 68% der Menge aus Beispiel 1. Besonders vorteilhaft ist, dass H0-DBT durch Hydrierung auch mit regenerativ erzeugtem Wasserstoff wieder in die hydrierte Form H18-DBT überführt werden kann (Kreislaufwirtschaft), während der Harnstoff aus Beispiel 1 verloren ist.

### Beispiel 3: Stickoxid-Entfernung mit Wasserstoff, der zudem als Treibstoff dient

Ein weiteres Beispiel ist die Verwendung von H18-DBT auch als Treibstoff für den Motor, wobei der entstehende Wasserstoff in einem Verbrennungsmotor oder in einer Brennstoffzelle zum Antrieb des Fahrzeugs genutzt wird.

In diesem Falle ist das Reduktionsmittel intrinsisch im Fahrzeug vorhanden, ein weiterer Tank ist nicht erforderlich.

In einem Verfahren zum Stickoxidabbau im Abgas einer Verbrennungseinrichtung, insbesondere im Abgas eines Kraftfahrzeug-Verbrennungsmotors, durch Wasserstoff wird der Wasserstoff aus einem Liquid Organic Hydrogen Carrier on-board hergestellt und, nachdem die Verbrennung des Treibstoffes ihren Höhepunkt überschritten hat, der Wasserstoff in den Brennraum so dosiert, dass die chemische Stöchiometrie der Reaktion von Stickoxiden zu Wasser und Stickstoff erfüllt ist.

In einer Alternative kann LOHC als Treibstoff für die Antriebseinheit genutzt werden.

In einer Vorrichtung zum Stickoxidabbau im Abgas einer Verbrennungseinrichtung, insbesondere im Abgas eines Kraftfahrzeug-Verbrennungsmotors, durch Wasserstoff wird der Wasserstoff aus einem Liquid Organic Hydrogen Carrier on-board hergestellt und in einem dem Brennraum nachgeschalteten Reaktor so zum Abgas dosiert , dass die chemische Stöchiometrie der Reaktion von Stickoxiden zu Wasser und Stickstoff erfüllt ist und der einen Katalysator enthalten kann, der die beschriebene chemische Reaktion 5 in einem weiten Temperatur- und Konzentrationsbereich von Stickoxiden nahezu stöchiometrisch ablaufen lässt.

In einer beispielhaften Vorrichtung enthält der benutzte Katalysator das Element Platin\.

In einem beispielhaften Verfahren liegt der Temperaturbereich in der Vorrichtung zwischen 40 °C und 300 °C .

In einem beispielhaften Verfahren wird die Menge der Dosierung des Wasserstoffs durch die Motorleistung bestimmt.

In einem beispielhaften Verfahren ist der Liquid Organic Hydrogen Carrier das System Dibenzyltoluol - Perhydrodibenzyltoluol .

In einem beispielhaften Verfahren kann der zur Herstellung des LOHC's notwendige Wasserstoff auch aus regenerativen Quellen stammen .

In einem beispielhaften Verfahren wird die für die Freisetzung von Wasserstoff aus dem LOHC notwendige Wärme direkt aus der Verbrennungsreaktion der Verbrennungseinrichtung bezogen.

## Patentansprüche

1. Vorrichtung zur Reduzierung von Stickoxiden (NOₓ) im Abgas aus einer Antriebseinheit (4) für ein Fahrzeug, wobei die Vorrichtung umfasst
a. die Antriebseinheit (4) zum Bereitstellen von Antriebsenergie,
b. einen ersten Speicherbehälter (7) für zumindest teilweise beladenes Wasserstoffträgermaterial,
c. einen mit dem ersten Speicherbehälter (7) verbundenen Dehydrierreaktor (10) zum Freisetzen von Wasserstoff von dem Wasserstoffträgermaterial,
d. einen mit dem Dehydrierreaktor (10) verbundenen Reduktionsreaktor (9) zum Nutzen des freigesetzten Wasserstoffs als Reduktionsmittel für Stickoxide (NOₓ),
e. eine Regelungseinheit (18), die mit der Antriebseinheit (4) und mit dem Dehydrierreaktor (10) in Signalverbindung steht,
**dadurch gekennzeichnet, dass**
die Regelungseinheit (18) dazu ausgeführt ist, das Zugeben des Wasserstoffs in den Reduktionsreaktor (9) zeitlich derart zu regeln, dass die Zugabe erfolgt, nachdem ein Höhepunkt einer Treibstoffverbrennung in der Antriebseinheit (4) überschritten ist, wobei der Höhepunkt der Treibstoffverbrennung ein Zeitpunkt während der Verbrennung im Motorprozess ist, zu dem 50 % des im Treibstoff gespeicherten Heizwertes als Wärme freigesetzt sind.

2. Vorrichtung gemäß Anspruch 1, **dadurch gekennzeichnet, dass** die Antriebseinheit (4) eine Verbrennungseinheit zum Verbrennen eines Gemischs aus Verbrennungsluft und Treibstoff ist.

3. Vorrichtung gemäß einem der vorstehenden Ansprüche, **dadurch gekennzeichnet, dass** der Reduktionsreaktor (9) der Antriebseinheit (4) nachgeschaltet ist oder in der Antriebseinheit (4) integriert ist.

4. Vorrichtung gemäß einem der vorstehenden Ansprüche, **gekennzeichnet durch** einen zweiten Speicherbehälter (7) zum Speichern des im Dehydrierreaktor (10) zumindest teilweise entladenen Wasserstoffträgermediums.

5. Vorrichtung gemäß einem der vorstehenden Ansprüche, **gekennzeichnet durch** eine Regelungseinheit (18) zum geregelten Zugeben einer Dosierungsmenge des Wasserstoffs in den Reduktionsreaktor (9) derart, dass die stöchiometrischen Voraussetzungen für die Reaktion von Stickoxiden zu Wasser und Stickstoff erfüllt sind.

6. Vorrichtung gemäß Anspruch 5, **dadurch gekennzeichnet, dass** die Regelungseinheit (18) mit der Antriebseinheit (4) in Signalverbindung steht.

7. Vorrichtung gemäß einem der vorstehenden Ansprüche, **gekennzeichnet durch** eine Wärmeübertragungsvorrichtung zum Übertragen von Abwärme der Antriebseinheit (4) an den Dehydrierreaktor (10).

8. Vorrichtung gemäß einem der vorstehenden Ansprüche, **dadurch gekennzeichnet, dass** in dem Reduktionsreaktor (9) Katalysatormaterial vorgesehen ist, das insbesondere Platin aufweist.

9. Vorrichtung gemäß einem der vorstehenden Ansprüche, **dadurch gekennzeichnet, dass** das Wasserstoffträgermaterial ein flüssiges organisches Trägermaterial (LOHC) ist, wobei insbesondere als zumindest teilweise beladenes Wasserstoffträgermaterial Perhydrodibenzyltoluol (H18-DBT) und als zumindest teilweise entladenes Wasserstoffträgermaterial Dibenzyltoluol (HO-DBT) verwendet werden.

10. Fahrzeug, insbesondere Kraftfahrzeug, mit einer Vorrichtung gemäß einem der vorstehenden Ansprüche.

11. Verfahren zur Reduzierung von Stickoxiden (NOₓ) im Abgas aus einer Antriebseinheit (4) für ein Fahrzeug umfassend die Verfahrensschritte
- Bereitstellen von Antriebsenergie mittels einer Antriebseinheit (4),
- Bereitstellen von zumindest teilweise beladenem Wasserstoffträgermaterial in einem ersten Speicherbehälter (7),
- Freisetzen von Wasserstoff von dem Wasserstoffträgermaterial in einem mit dem ersten Speicherbehälter (7) verbundenen Dehydrierreaktor (10),
- Zuführen des freigesetzten Wasserstoffs in einen mit dem Dehydrierreaktor (10) verbundenen Reduktionsreaktor (9),
- Reduzieren der Stickoxide (NOₓ) mittels des freigesetzten Wasserstoffs in dem Reduktionsreaktor (9),
**gekennzeichnet durch**
- zeitlich geregeltes Zugeben des Wasserstoffs in den Reduktionsreaktor (9), wobei die Zugabe erfolgt, nachdem ein Höhepunkt einer Treibstoffverbrennung in einer Verbrennungseinheit als Antriebseinheit (4) überschritten ist, wobei der Höhepunkt der Treibstoffverbrennung ein Zeitpunkt während der Verbrennung im Motorprozess ist, zu dem 50 % des im Treibstoff gespeicherten Heizwertes als Wärme freigesetzt sind.

12. Verfahren gemäß Anspruch 11, **gekennzeichnet durch** ein, insbesondere in Abhängigkeit einer aktuellen Antriebsleistung, geregeltes Zugeben einer Dosierungsmenge des Wasserstoffs in den Reduktionsreaktor (9), so dass insbesondere die stöchiometrischen Voraussetzungen für die Reaktion von Stickoxiden zu Wasser und Stickstoff erfüllt sind.

13. Verfahren gemäß einem der Ansprüche 11 oder 12, **dadurch gekennzeichnet, dass** die Prozesstemperaturen im Reduktionsreaktor (9) in einem Temperaturbereich zwischen 40 °C und 300 °C liegen, insbesondere in einem Temperaturbereich zwischen 100 °C und 150 °C.

14. Verfahren gemäß einem der Ansprüche 11 bis 13, **dadurch gekennzeichnet, dass** die zeitliche Lage des Höhepunkts der Verbrennung durch eine schnelle Druckverlaufsmessung und eine Analyse des gemessenen Druckverlaufs mittels einer Energiebilanz erfasst wird.

15. Verfahren gemäß einem der Ansprüche 11 bis 14, **dadurch gekennzeichnet, dass** der NOx-Anteil mittels eines NOx-Sensors unmittelbar gemessen wird und/oder Betriebsdaten mittels an der Antriebseinheit vorhandener Sensoren, insbesondere Temperatur-Sensor und/oder Druck-Sensor, gemessen werden, wobei aus den Betriebsdaten NOx-Emissionen mittels eines analytischen und/oder numerischen Modells berechnet werden.

## Claims

1. A device for reducing nitrogen oxides (NOₓ) in exhaust gas from a drive unit (4) for a vehicle, the device comprising
a. the drive unit (4) for providing drive energy,
b. a first storage container (7) for at least partially loaded hydrogen carrier material,
c. a dehydrogenation reactor (10) connected to the first storage container (7) for releasing hydrogen from the hydrogen carrier material,
d. a reduction reactor (9) connected to the dehydrogenation reactor (10) for utilizing the released hydrogen as a reducing agent for nitrogen oxides (NOₓ),
e. a control unit (18) which is in signal communication with the drive unit (4) and with the dehydrogenation reactor (10),
**characterized in that**
the control unit (18) is embodied to control the timing of the addition of the hydrogen into the reduction reactor (9) such that the addition occurs after a peak of a fuel combustion in the drive unit (4) has been exceeded, wherein the peak of the fuel combustion is a point in time during the combustion in the engine process at which 50% of the calorific value stored in the fuel has been released as heat.

2. A device according to claim 1, **characterized in that** the drive unit (4) is a combustion unit for burning a mixture of combustion air and fuel.

3. A device according to any one of the preceding claims, **characterized in that** the reduction reactor (9) is connected downstream from the drive unit (4) or is integrated in the drive unit (4).

4. A device according to any one of the preceding claims, **characterized by** a second storage container (7) for storing the hydrogen carrier medium that has at least partially been unloaded in the dehydrogenation reactor (10).

5. A device according to any one of the preceding claims, **characterized by** a control unit (18) for controlled addition of a metered amount of the hydrogen into the reduction reactor (9) in such a way that the stoichiometric requirements for the reaction of nitrogen oxides to water and nitrogen are fulfilled.

6. A device according to claim 5, **characterized in that** the control unit (18) is in signal communication with the drive unit (4).

7. A device according to any one of the preceding claims, **characterized by** a heat transfer device for transferring waste heat from the drive unit (4) to the dehydrogenation reactor (10).

8. A device according to any one of the preceding claims, **characterized in that** catalyst material, comprising in particular platinum, is provided in the reduction reactor (9).

9. A device according to any one of the preceding claims, **characterized in that** the hydrogen carrier material is a liquid organic carrier material (LOHC), wherein in particular perhydrodibenzyltoluene (H18-DBT) is used as at least partially loaded hydrogen carrier material and dibenzyltoluene (HO-DBT) is used as at least partially unloaded hydrogen carrier material.

10. A vehicle, in particular a motor vehicle, having a device according to any one of the preceding claims.

11. A method for reducing nitrogen oxides (NOₓ) in exhaust gas from a drive unit (4) for a vehicle, comprising the following method steps
- providing drive energy by means of a drive unit (4),
- providing at least partially loaded hydrogen carrier material in a first storage container (7),
- releasing hydrogen from the hydrogen carrier material in a dehydrogenation reactor (10) connected to the first storage container (7),
- feeding the released hydrogen into a reduction reactor (9) connected to the dehydrogenation reactor (10),
- reducing the nitrogen oxides (NOₓ) by means of the released hydrogen in the reduction reactor (9),
**characterized by**
- time-controlled addition of the hydrogen into the reduction reactor (9), wherein the addition takes place after a peak of a fuel combustion in a combustion unit as a drive unit (4) has been exceeded, the peak of the fuel combustion being a point in time during the combustion in the engine process at which 50% of the calorific value stored in the fuel has been released as heat.

12. A method according to claim 11, **characterized by** a controlled addition of a metered quantity of the hydrogen into the reduction reactor (9), in particular depending on a current drive power, such that in particular the stoichiometric requirements for the reaction of nitrogen oxides to water and nitrogen are fulfilled.

13. A method according to any one of claims 11 or 12, **characterized in that** the process temperatures in the reduction reactor (9) are in a temperature range between 40 °C and 300 °C, in particular in a temperature range between 100 °C and 150 °C.

14. A method according to any one of claims 11 to 13, **characterized in that** the temporal position of the peak of the combustion is detected by a quick pressure curve measurement and an analysis of the measured pressure curve by means of an energy balance.

15. A method according to any one of claims 11 to 14, **characterized in that** the NOₓ content is measured directly by means of an NOₓ sensor and/or operating data are measured by means of sensors provided on the drive unit, in particular a temperature sensor and/or a pressure sensor, wherein NOₓ emissions are calculated from the operating data by means of an analytical and/or numerical model.

## Revendications

1. Dispositif pour réduire les oxydes d'azote (NOₓ) dans les gaz d'échappement provenant d'une unité d'entraînement (4) pour un véhicule, le dispositif comprenant
a. l'unité d'entraînement (4) pour fournir de l'énergie d'entraînement,
b. un premier réservoir de stockage (7) pour le matériau porteur d'hydrogène au moins partiellement chargé,
c. un réacteur de déshydrogénation (10) relié au premier réservoir de stockage (7) pour libérer l'hydrogène du matériau porteur d'hydrogène,
d. un réacteur de réduction (9) relié au réacteur de déshydrogénation (10) pour utiliser l'hydrogène libéré comme agent de réduction des oxydes d'azote (NOₓ),
e. une unité de gestion (18) qui est en liaison de signalisation avec l'unité d'entraînement (4) et avec le réacteur de déshydrogénation (10),
**caractérisé en ce que**
ladite unité de gestion (18) est adaptée pour commander dans le temps l'ajout de l'hydrogène dans le réacteur de réduction (9) de telle sorte que l'ajout a lieu après qu'un point culminant de combustion de carburant dans l'unité d'entraînement (4) a été dépassé, le point culminant de combustion de carburant étant un moment pendant la combustion dans le processus du moteur auquel 50 % de la valeur calorifique stockée dans le carburant sont libérés sous forme de chaleur.

2. Dispositif selon la revendication 1, **caractérisé en ce que** ladite unité d'entraînement (4) est une unité de combustion pour la combustion d'un mélange d'air de combustion et de carburant.

3. Dispositif selon l'une quelconque des revendications précédentes, **caractérisé en ce que** ledit réacteur de réduction (9) est monté en aval de l'unité d'entraînement (4) ou est intégré dans l'unité d'entraînement (4).

4. Dispositif selon l'une quelconque des revendications précédentes, **caractérisé par** un deuxième réservoir de stockage (7) pour stocker le matériau porteur d'hydrogène au moins partiellement déchargé dans le réacteur de déshydrogénation (10).

5. Dispositif selon l'une quelconque des revendications précédentes, **caractérisé par** une unité de gestion (18) pour l'ajout régulé d'une quantité de dosage de l'hydrogène dans le réacteur de réduction (9) de telle sorte que les conditions stœchiométriques pour la réaction des oxydes d'azote en eau et en azote soient remplies.

6. Dispositif selon la revendication 5, **caractérisé en ce que** ladite unité de gestion (18) est en liaison de signalisation avec l'unité d'entraînement (4).

7. Dispositif selon l'une quelconque des revendications précédentes, **caractérisé par** un dispositif de transfert de chaleur pour transférer la chaleur perdue de l'unité d'entraînement (4) au réacteur de déshydrogénation (10).

8. Dispositif selon l'une quelconque des revendications précédentes, **caractérisé en ce que** dans le réacteur de réduction (9), un matériau catalyseur qui comprend en particulier du platine est prévu.

9. Dispositif selon l'une quelconque des revendications précédentes, **caractérisé en ce que** ledit matériau porteur d'hydrogène est un matériau porteur organique liquide (LOHC), dans lequel en particulier comme matériau porteur d'hydrogène au moins partiellement chargé le perhydrodibenzyltoluène (H18-DBT) et comme matériau porteur d'hydrogène au moins partiellement déchargé le dibenzyltoluène (H0-DBT) sont utilisés.

10. Véhicule, en particulier véhicule automobile, comportant un dispositif selon l'une quelconque des revendications précédentes.

11. Procédé de réduction des oxydes d'azote (NOₓ) dans les gaz d'échappement d'une unité d'entraînement (4) pour un véhicule, comprenant les étapes de procédé suivantes
- mise à disposition d'énergie d'entraînement au moyen d'une unité d'entraînement (4),
- mis à disposition d'un matériau porteur d'hydrogène au moins partiellement chargé dans un premier réservoir de stockage (7),
- libération d'hydrogène à partir du matériau porteur d'hydrogène dans un réacteur de déshydrogénation (10) relié au premier réservoir de stockage (7),
- introduction d'hydrogène libéré dans un réacteur de réduction (9) relié au réacteur de déshydrogénation (10),
- réduction des oxydes d'azote (NOₓ) au moyen de l'hydrogène libéré dans le réacteur de réduction (9),
**caractérisé par**
- un ajout régulé dans le temps de l'hydrogène dans le réacteur de réduction (9), l'ajout ayant lieu après qu'un point culminant d'une combustion de carburant dans une unité de combustion en tant qu'unité d'entraînement (4) a été dépassé, le point culminant de la combustion de carburant étant un moment pendant la combustion dans le processus du moteur auquel 50 % de la valeur calorifique stockée dans le carburant sont libérés sous forme de chaleur.

12. Procédé selon la revendication 11, **caractérisé par** un ajout régulé, en particulier en fonction d'une puissance d'entraînement actuelle, d'une quantité de dosage de l'hydrogène dans le réacteur de réduction (9), de sorte que les conditions stœchiométriques pour la réaction des oxydes d'azote en eau et en azote sont en particulier remplies.

13. Procédé selon l'une quelconque des revendications 11 ou 12, **caractérisé en ce que** les températures de traitement dans le réacteur de réduction (9) sont comprises dans une plage de températures entre 40°C et 300°C, en particulier dans une plage de températures entre 100°C et 150°C.

14. Procédé selon l'une quelconque des revendications 11 à 13, **caractérisé en ce que** la position temporelle du point culminant de la combustion est détectée par une mesure rapide de l'évolution de la pression et une analyse de l'évolution de la pression mesurée au moyen d'un bilan énergétique.

15. Procédé selon l'une quelconque des revendications 11 à 14, **caractérisé en ce que** la proportion de NOₓ est mesurée directement au moyen d'un capteur de NOₓ et/ou des données de fonctionnement sont mesurées au moyen de capteurs présents sur l'unité d'entraînement, en particulier un capteur de température et/ou un capteur de pression, dans lequel des émissions de NOₓ sont calculées à partir des données de fonctionnement au moyen d'un modèle analytique et/ou numérique.
